(19) Europäisches Patentamt
European Patent Office
Office européen des brevets

(11) **EP 1 766 268 B1**

(12) **EUROPEAN PATENT SPECIFICATION**

(45) Date of publication and mention
of the grant of the patent:
**13.05.2009 Bulletin 2009/20**

(21) Application number: **05725140.7**

(22) Date of filing: **11.03.2005**

(51) Int Cl.:
*F16J 15/02* (2006.01)    *F16J 15/10* (2006.01)
*B29C 53/56* (2006.01)

(86) International application number:
**PCT/US2005/007801**

(87) International publication number:
**WO 2005/103533 (03.11.2005 Gazette 2005/44)**

(54) **COIL GASKET**

SPIRALDICHTUNG

JOINT STATIQUE EN SPIRE

(84) Designated Contracting States:
**AT BE BG CH CY CZ DE DK EE ES FI FR GB GR HU IE IS IT LI LT LU MC NL PL PT RO SE SI SK TR**

(30) Priority: **13.04.2004 US 823512**

(43) Date of publication of application:
**28.03.2007 Bulletin 2007/13**

(73) Proprietor: **Gore Enterprise Holdings, Inc.**
**Newark, DE 19714-9206 (US)**

(72) Inventor: **DOVE, Kevin, E.**
**Wilmington, DE 19808 (US)**

(74) Representative: **Shanks, Andrew et al**
**Marks & Clerk LLP**
**19 Royal Exchange Square**
**Glasgow**
**G1 3AE (GB)**

(56) References cited:
US-A- 4 096 227     US-A- 5 281 475
US-A- 5 527 047     US-A- 6 032 960

• **PATENT ABSTRACTS OF JAPAN vol. 1999, no. 05, 31 May 1999 (1999-05-31) -& JP 11 051192 A (JAPAN GORE TEX INC), 23 February 1999 (1999-02-23)**

**Description**

**BACKGROUND OF THE INVENTION**

A wide variety of gaskets are known for use in sealing applications. Porous expanded polytetrafluoroethylene (PTFE) is widely used today as a gasket material. As disclosed in U.S. Patent No. 3,953,566 to Gore, this material has numerous properties making it highly desirable as a gasket. These properties include being readily compressible and conformable, being chemically resistant, having relatively high strength, and being far less prone to creep relaxation and loss of sealing pressure than non-expanded, non-porous PTFE alone.

Furthermore, gaskets made from biaxially or multiaxially expanded PTFE have improved sealing performance as compared to uniaxially expanded PTFE gaskets. For example, gaskets made from multiaxially expanded PTFE are resistant to creep relaxation and cold flow in multiple directions. The multidirectional tensile strength in multiaxially expanded PTFE gaskets provides circumferential and radial strength to the gasket and increases the cut through resistance of the gasket. Enhanced radial strength and cut through resistance provided by multiaxially expanded PTFE is achieved when the plane of expansion of the expanded PTFE is substantially parallel to the flange surface on which the gasket is installed.

In many sealing applications, the gasket is used to seal the junction between flanges, such as between pipes. Expanded PTFE is a desirable material for the gaskets because the expanded PTFE gasket can be placed between the flanges, and the flanges can then be pressed together with the application of force, such as by tightening of bolts. This application of force compresses the expanded PTFE. As the expanded PTFE is compressed, its initial pore volume is reduced, thus densifying the expanded PTFE. Particularly with metal-to-metal flanges, it is possible to apply sufficient force (or "stress") to the flanges to fully densify the expanded PTFE. Thus, in at least part of the expanded PTFE gasket, the pore volume may be reduced to substantially zero, preventing fluid contained within the pipes from leaking between the flanges by the densified, non-porous PTFE gasket, which seals the flanges.

In many applications, particularly when harsh chemicals are used which would readily break down the metal or the metal could contaminate the chemical which is being transported or housed, it is common to use glass-lined steel, glass, or fiberglass reinforced plastic ("FRP") piping and vessels. Because this equipment is often used with extremely harsh chemicals, there is a great desire to use PTFE gaskets to seal the connecting flanges of this equipment because of the well-known extraordinary chemical resistance of PTFE. Unfortunately, non-expanded, non-porous PTFE gaskets are generally not conformable enough to effectively seal this type of equipment. In the case of glass-lined steel flanges, although there is a relatively smooth finish, there is often a large amount of unevenness or lack of flatness associated with the flanges. This unevenness or lack of flatness requires the gasket to conform to large variations around the perimeter as well as between the internal and external diameter of the flange in order for an effective seal to be created. Thus, a non-expanded, non-porous PTFE gasket is not conformable enough to provide an adequate seal in many of these applications.

Because expanded PTFE is conformable, it would be desirable to use expanded PTFE to seal these commonly uneven flanges. Unfortunately, in many applications it is not possible to apply sufficient force to the flanges to create enough gasket stress to fully densify the expanded PTFE gasket to create an effective seal. For example, glass-lined steel piping flanges, glass flanges, or FRP piping flanges may deform, fracture, or break upon the application of a high amount of stress. Thus, in these applications, an expanded PTFE gasket may not be completely densified to reach a non-porous state, and therefore does not become leak proof, because the maximum stress that can be applied to the flanges without breaking them is not sufficient to densify the gasket. In some constructions where expanded PTFE gasket is not densified to a substantially non-porous state, leakage can occur through the residual porosity within the gasket. Often, this leakage is detected immediately after the installation of the gasket through either a "sniffing" technique or a "bubble test". In the bubble test, a solution such as soapy water is applied to the gasketed flange and an internal air pressure is applied to the piping system or vessel. If a leak of a sufficient rate is present, bubbles will form in the soapy water solution. In some cases, a leak may exist but at a rate small enough not to form a bubble. In such cases and where corrosive chemicals are being processed, the leak may persist for months or years where the corrosive chemicals can eventually leak through the gasket undetected and attack the flange bolts or clamps resulting in a catastrophic failure of the flange.

As discussed in U.S. Patent Publication 2003/0003290 in the name of Hisano et al., methods are known in industry for producing gaskets by wrapping ePTFE films on a mandrel to produce a tubular element whereby the tubular element is sliced into rings to produce gaskets. Within the laminated layers of these gaskets, a compact ePTFE film is interposed to prevent fluid penetration leakage through the gasket. These methods for producing such gaskets are limited in the size of gaskets that can be produced. The laminate thickness in these methods is typically limited to a maximum of about 10 mm to 15 mm which corresponds to the a gasket width of only 15 mm or less. Laminate thicknesses greater than this are difficult to restrain during the sintering process and can result in significant density gradients within the laminate. Gasket widths in typical applications, especially with larger diameter gaskets, are generally on the order of 25 mm and greater. Furthermore, when the tubular element is sliced, the laminate layers of the ePTFE are oriented perpendicular to the gasket upper and lower surfaces. Therefore, the transverse direction of expansion of the ePTFE is oriented in the z direction or thickness direction of the gasket and provides little or no strength to the gasket in the radial direction.

U. S. Patent No. 6,485,809, in the name of Minor et al., teaches a low stress to seal gasket construction comprising a multilayer, unitary gasket including at least one inner layer of expanded PTFE disposed between a first substantially air impermeable outer layer and a second substantially air impermeable outer layer, and a substantially air impermeable region bridging the first and second substantially air impermeable layers. By "low stress to seal" is meant a gasket which provides a substantially air tight, or air impermeable, seal upon the application of a relatively low stress (i.e., a stress below that required to fully densify a porous expanded PTFE gasket, generally less than about 20,700 kPa (3000 psi)). This patent teaches gaskets which are stamped or cut from multilayered laminated sheets formed by wrapping layers around a mandrel, and subjecting gaskets to compressive treatment to compress a discreet portion and form an air impermeable region. While this patented construction may overcome many challenges in creating a low stress to seal gasket, there are limitations to the sizes of gaskets that can be produced when cutting gaskets from sheet goods. The largest size gasket that can be produced when cutting from sheet gasketing cannot be larger than the sheet size itself. Another concern with the manufacturing of such large size gaskets from sheet gasketing materials is the cost associated with producing such gaskets. For example, the manufacturing efficiencies of cutting gaskets from sheet stock can be relatively low especially with large diameter gaskets..

U. S. Patent No. 4,990,296 to Pitolaj teaches a method of welding together filled sintered PTFE components, wherein large diameter gaskets can be formed in sections by welding the ends of the sections together. This method, while perhaps suitable for sintered filled PTFE, would not be suitable for soft, porous expanded PTFE which would densify as a result of the applied heat and pressure at the welded joint. Densification would result in thinner, hard and non-conformable sections within the gasket. A gasket having variable thickness and softness would not be able to effectively seal fragile flanges such as glass lined steel and FRP flanges.

U. S. Patent No. 5,964,465 to Mills et al. teaches a biaxially expanded PTFE form-in-place type gasket. Form-in-place gaskets have the advantage of being able to be formed to any size flange without the limitations of gaskets cut from sheet stock such as low material utilization rates. Form-in-place gaskets made in accordance with the teachings of Mills et al., comprised of biaxially expanded PTFE, may have additional advantages offered by the biaxially expanded PTFE such as chemical resistance, dimensional stability, and resistance to creep relaxation. However, as previously noted, since adequate gasket stress cannot be applied to densify the ePTFE, these gaskets cannot effectively seal glass lined steel and FRP flanges.

In PCT publication WO01/27501 A1 to Dove et al., a form-in-place gasket comprising an inner layer of expanded PTFE and substantially air impermeable outer layers that are bridged by a substantially impermeable region is taught. The substantially air impermeable outer layers and substantially air impermeable region are intended to prevent permeation through the expanded PTFE gasket material. The purpose of this gasket construction is to provide a tight seal at the low stresses where ePTFE alone can not be fully densified by preventing leakage through the porous ePTFE. However, gaskets constructed according to the teachings of WO 01/27501 are subject to a number of disadvantages. For example, outer air impermeable layers made of incompressible materials such as full density PTFE or densified expanded PTFE may increase the stiffness of the gasket, making it too rigid for a form-in-place gasket. It is desirable for form-in-place gaskets to be flexible so that they can be formed to the geometry of the flange.

Further, form-in-place gaskets comprising biaxially expanded PTFE are typically joined at the ends by skive-cutting the ends and overlapping the skive cut ends as taught in U.S. Patent No. 5,964,465. Form-in-place gaskets constructed in accordance with PCT publication WO01/27501 A1 to Dove et al. having the outer impermeable layers, cannot be joined by overlapping the ends of the tape using the skive cutting technique without compromising the air impermeable nature of the material. When a skive cut is made through the outer air impermeable layers, porous expanded PTFE may be exposed, providing a leak path through the gasket.

In U.S. Patent Publication No. 2003/0003290 A1 to Hisano et al., a sealing material in the form of a tape is taught which consists of laminated layers of porous expanded PTFE which are slit into strips having a height greater than the width, and wherein the laminated end faces on the long side of the laminated strip are in contact with the tightening surface. A plurality of the laminated strips may be joined together on the laminated surfaces of the laminate with tetrafluoroethylene-hexafluoropropylene copolymer or tetrafluoroethylene-perfluoroalkyl vinyl ether copolymer film. It is further taught that at least one layer may be interposed within the laminate for preventing fluid penetration. In the form of a closed ring or gasket where the longitudinal beginning and end of the tape has been joined, the layers of expanded PTFE and the layer for preventing fluid penetration are vertically oriented when the gasket is installed on a flange surface. The layers intended to prevent fluid penetration in the radial direction may provide the gasket with low stress to seal capability by preventing leakage through the porous ePTFE. For gaskets made according to this method, the longitudinal strength of the expanded PTFE provides strength to the gasket in the circumferential direction when the gasket is installed on a flange surface. However, with the ePTFE layers laminated in the width direction, the transverse directional strength of the ePTFE is oriented in the vertical or "z" direction of the gasket. Therefore, little to no strength is provided to the gasket in the radial direction. Therefore, gaskets taught in U.S. Patent Publication No. 2003/0003290 A1 would be prone to cold flow in the width direction and lack dimensional stability. For gasketing applications involving glass lined steel flanges it is preferred that the gasket material to be dimensionally stable to prevent fracture of the glass lining.

Form-in-place gaskets, especially biaxially expanded PTFE gaskets, have the disadvantage of requiring an overlap of the ends of the tape to form the closed shape of a gasket. It is usually necessary for skilled operators to perform the installation of these gaskets in order to insure the skive cut is done correctly. Improper installation may result in leakage at the overlap site. In many applications form-in-place gaskets are not deemed acceptable because of the overlapped ends which is perceived as a weak point within the gasket. Because of this concern there is reluctance to using biaxially expanded PTFE form-in-place gaskets.

JP 11051192 describes a gasket having an inner periphery and a plurality of windings of expanded PTFE tape and alternating windings of an air impermeable layer wound in an increasing distance around the inner periphery. Sequential expanded PTFE tape windings are joined by the alternating windings of the substantially air impermeable layer.

It would be desirable to provide a gasket that can be formed from a tape to avoid the low yields and high costs associated with cutting gaskets from sheet stocks and that would also not be limited in size or shape. It would also be desirable for such a gasket to be a continuous and unitary gasket without joints resulting from overlapping tape ends. It would be further desirable for such a gasket to be a conformable, creep resistant, and chemically resistant gasket that can seal at the low stresses common to applications in which glass lined steel and FRP flanges are used, and that does not fracture upon the application of high compressive stresses commonly used to seal steel flanges. It is therefore one object of the present invention to provide a continuous, unitary gasket made from an expanded PTFE tape that provides a substantially air tight seal upon the application of low stress and to provide a method for manufacturing such a gasket.

## SUMMARY OF THE INVENTION

The present invention provides a gasket according to claim 1, formed from winding at least one length of ePTFE tape and joining the tape windings. Interposed between the windings of the tape is a substantially air impermeable layer. Where a gasket is formed, the substantially air impermeable layer prevents penetration or leakage through the gasket in the radial direction. Gaskets of the present invention had significantly lower leak rates than traditional sheet or tape gaskets when tested for sealability. A decrease in leak rate of about 1.5 orders of magnitude or more was realized with the inventive gaskets having a substantially air impermeable layer as compared with gaskets cut from ePTFE sheet and formed from ePTFE tape without any impermeable layers interposed therein. The lower leak rate demonstrated by the gaskets of the present invention is attributable in part to the substantially parallel orientation of the plane of expansion of the expanded PTFE with the flange surface and the incorporation of substantially air impermeable layers interposed within the gasket.

In another aspect, the invention provides a method according to claim 11, for producing a gasket comprising the steps of providing an ePTFE tape and a material capable of forming a substantially air impermeable layer, winding the ePTFE tape and the substantially air impermeable layer, to form alternating windings of ePTFE and the substantially air impermeable layer, and joining the windings.

## BRIEF DESCRIPTION OF THE DRAWINGS

A fuller understanding of the present invention will be gained by reference to the following detailed description when read in conjunction with accompanying drawings. It should be understood that the invention is not limited to the precise arrangement shown.

Fig. 1 is a top view and cross-section views of a gasket in accordance with the present invention.
Fig. 2 is a top view of a gasket in accordance with the present invention.
Fig. 3 is a top view of a gasket in accordance with the present invention.
Fig. 4 is a three-quarter perspective view of a form-in-place gasket.
Fig. 5 is a three-quarter perspective view of a tape material and orientation.
Fig. 6 is an exploded view of a fixture and a method of assembling a tape having a barrier layer.
Fig. 7 is a side view of a fixture and method of assembling a gasket in accordance with the present invention.
Fig. 8 is a graphical representation of leak rate results of gaskets at a gasket stress of about 6 MPa
Fig. 9 is a side cross-sectional view of a test apparatus used to measure sealability of gaskets.
Fig. 10 is a three-quarter perspective view of a gasket tape and orientation.
Fig. 11 is a graphical representation of Wide-Angle X-ray Scattering Test results.

**DETAILED DESCRIPTION OF THE INVENTION**

The preferred embodiment of the present invention is directed to a gasket that provides a substantially air impermeable seal with low load upon the tightening surfaces, and with low stress applied to the gaskets. The gasket is formed comprising alternate windings of a tape comprising ePTFE and a substantially air impermeable layer, each winding at an increasing distance around the inner diameter or inner periphery of a gasket. Gaskets of the present invention exhibit excellent dimensional stability and resistance to creep relaxation. The present invention is further directed to novel methods for forming the novel structures of the present invention. Methods are disclosed for joining or bonding together windings of ePTFE tape, such as multilayered porous expanded PTFE tapes, with a substantially air impermeable layer between the tape windings. The novel methods provide low stress to seal gaskets, and are particularly useful for large size gaskets.

As previously stated, by "low stress to seal gasket" is meant a gasket, such as a gasket of the present invention, which provides a substantially air tight, or air impermeable, seal upon the application of a relatively low stress (i.e., a stress below that required to fully densify a porous expanded polytetrafluoroethylene (ePTFE) gasket, generally less than about 20,700 kPa (3000 psi)).

By "air impermeable" as used herein is meant resistant to the transport of air through a material. Permeability may be measured using any known technique, such as ASTM D-1434-82 (2003).

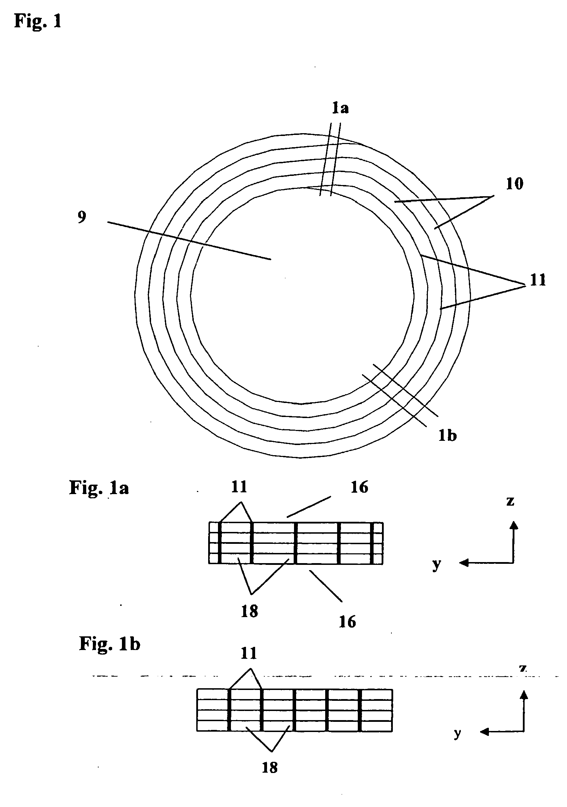

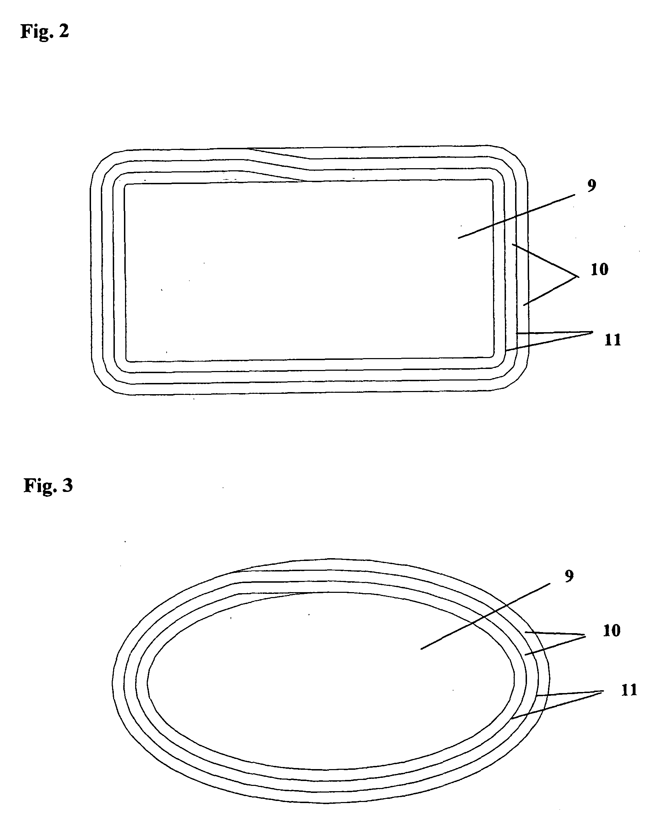

Exemplary embodiments of the present invention are illustrated in Figs. 1-3. Figs. 1-3 illustrate preferred unitary gaskets each comprising an inner periphery or diameter 9 and at least two windings or rotations of at least one porous expanded PTFE tape 10. The windings of the ePTFE tape are alternated with windings of at least one substantially air impermeable layer 11 also wound in an increasing distance around the inner periphery or diameter. Preferably, each winding or rotation of the at least one expanded PTFE tape 10 is alternated and joined by the at least one substantially air impermeable layer 11.

Illustrated in Figs. 1a and 1b are cross-sections of a representative gasket of the present invention. The expanded PTFE tape has upper and lower tape surfaces 16 corresponding to upper and lower gasket surfaces, and side surfaces 18 extending between the upper and lower tapes surfaces. Preferably, as shown in Figs. 1a and 1b, the substantially air impermeable layer 11 is bonded to side surfaces 18 of multi-layered porous ePTFE tape, the side surfaces extending between upper and lower laminate tape layers.

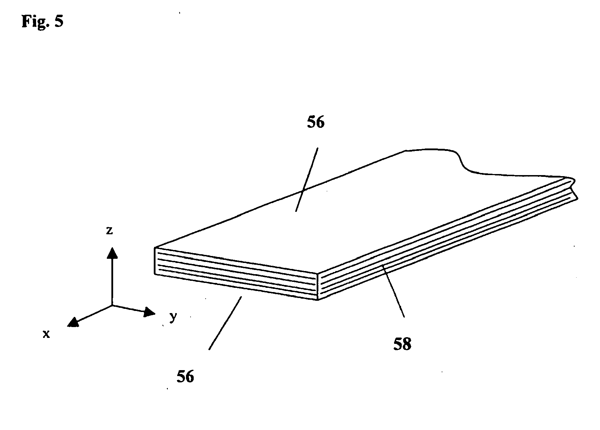

Gaskets of the present invention may be formed from one tape or a plurality of tapes, and is not particularly limited by the number of tapes that may be joined to form the gasket. For example, more than one tape may be wound simultaneously around a form to form tape windings. The at least one tape making up the gasket may be monolithic or multilayered porous expanded PTFE. Preferred porous ePTFE tapes suitable for use in the present invention are multilayered laminate tape wherein the plane of expansion of the ePTFE is in the x-y plane of the tape, and the ePTFE layers including upper and lower tape layers of the tape are parallel to the plane of expansion. Fig. 5 illustrates a multilayer tape suitable for use in the present invention having upper and lower tape layers (56) in the X-Y plan of the tape. Where the ePTFE tape is monolithic, the plane of expansion of the ePTFE is parallel to the x-y plane of the tape. The x-y plane of the tape is substantially parallel to the sealing surface. The plane of expansion of ePTFE can be determined, for example, by Wide-Angle X-ray Scattering test methods, as described herein.

Preferred porous expanded PTFE comprises microporous expanded PTFE as taught in U.S. Pat. Nos. 3,953,566 and 4,187,390. PTFE may be expanded uniaxially, biaxially, or multiaxially, and preferably has a density of less than 1.8 g/cc, more preferred less than 1.2 g/cc, further preferred less than 1.0 g/cc, and a most preferred density of less than 0.8 g/cc. While not limited by a number of porous expanded PTFE layers, preferred multilayered tape is formed from multiple self-adhered porous expanded PTFE layers, made by any method known in the art for forming multilayered porous expanded PTFE tapes; methods suitable for use in the present invention are described, for example, in U.S. Pat. No. 5,964,465, and 6,485,809. Suitable tape is commercially available, for example, under the trade names GORE-TEX® Gasket Tape, GORE-TEX® Series 300 Gasket Tape and GORE-TEX® Series 600 Gasket Tape (W.L. Gore & Assoc., Inc., Elkton, MD).

While preferably all layers of multilayer ePTFE tape are ePTFE, alternately, one or more tape layers may comprise materials other than a PTFE material to provide desired properties to the gasket. For example, one or more of polymeric films, metal foils, metal screens or the like may be provided to the multilayered tape to enhance properties to the resulting gasket. In a preferred embodiment a gasket is formed from at least one multilayered laminated ePTFE tape in which upper and lower laminate layers are ePTFE.

At least a portion of the porous expanded PTFE, or at least one layer of multilayered PTFE tape, may be coated or filled to provide desired properties to the gasket. For example, expanded PTFE may be coated to provide properties such as resilience, electrochemical responsiveness, added strength, further reduced creep relaxation, and the like. Additionally, porous expanded PTFE may be filled with various fillers, for example, such as those used to fill expanded microporous PTFE sheets as taught in U.S. Pat. Nos. 4,096,227 and 4,985,296. Suitable particulate fillers may include, for example, inorganic materials such as metals, semi-metals, metal oxides, glass, ceramic and the like. Alternatively, other suitable particulate fillers may include, for example, organic materials selected from activated carbon, carbon black, polymeric resin, graphite and the like. In one preferred embodiment at least one layer of multilayered porous expanded PTFE tape comprises at least one filler. Preferably, the at least one filler comprises at least one of silica, barium sulfate and glass beads.

At least one substantially air impermeable layer is alternately wound with at least one porous ePTFE tape for at least two windings of the ePTFE tape at an increasing distance around a center point such as a gasket inner periphery. The substantially air impermeable layer may be bonded to the ePTFE tape prior to tape winding or during the winding process. Substantially air impermeable layers prevent fluid from permeating through the gaskets in the radial direction providing the low stress to seal nature of the gasket. Substantially air impermeable materials of the present invention are more air impermeable than the porous expanded PTFE materials used to form the tape. Materials suitable for use in the present invention comprise an air impermeable material, or at least one material capable of forming an air impermeable layer having a permeability to air that is less than the porous expanded PTFE of the tape material. Preferred air impermeable materials comprise fluoropolymers, including, but not limited to, tetrafluoroethylene/ hexafluoropropylene copolymer (FEP), tetrafluoroethylene/ (perfluoroalkyl) vinyl ether copolymer (PFA), PTFE, densified expanded PTFE, and combinations thereof. Preferred are melt processable fluoropolymers. Most preferred are PFA and FEP. Air impermeable material may comprise porous PTFE impregnated with fillers such as an elastomer, a fluoroelastomer, a perfluoroelastomer, or a perfluorosilicone elastomer. Preferred are air impermeable layers having a width of about 0.01 mm to 0.5 mm when calculated, for example; by measuring the distance between two ePTFE tape windings that are aligned along side surfaces and joined by the substantially air impermeable layer.

Gaskets of the present invention are preferably formed from at least one porous ePTFE tape wound around the outer periphery of a form or die at an increasing distance from the form or die until at least two turns around the form are achieved. It is preferred that the ePTFE is wound continuously for at least two windings or rotations around the form or die at increasing distances from the outer periphery to form a coil. At least two sequential or adjacent ePTFE windings are preferably joined by interposing alternating windings of at least one substantially air impermeable material between the ePTFE windings. The at least two windings of at least one ePTFE tape and at least one substantially air impermeable material are joined to form a unitary gasket. The shape of the die and gasket is not limited and therefore may be formed into any desired shape, such as circular or non-circular, including but not limited to a substantially circular, elliptical, rectangular or square shape. Thus, the term "coil" as used herein refers to any shape formed from multiple rotations or windings of at least one ePTFE tape at an increasing distance around a center point, an inner gasket periphery, or an outer periphery of a die or form. Each rotation of the ePTFE tape winding is aligned along the length of adjacent ePTFE tape windings at an increasing distance from the die or the inner diameter/periphery of the gasket. Preferably, the tape windings are aligned along tape side surfaces, and at least one air impermeable layer extends between the tape side surfaces to join each winding of ePTFE of the tape to form a unitary gasket. A preferred gasket, such as a circular gasket, comprises an inner diameter and at least two spirals comprising alternating rotations of at least one porous multilayer ePTFE tape and at least one substantially air impermeable layer. The spirals of ePTFE tape and the substantially air impermeable layer preferably rotate in an increasing distance around the inner diameter for at least two rotations of the ePTFE. The preferred ePTFE tape is a multilayer tape having upper and lower tape layers, and side surfaces extend between upper and lower tape layers. The rotations of ePTFE tape are aligned along tape side surfaces and joined at the side surfaces by the alternating spiral of at least one substantially air impermeable layer between the rotations of ePTFE.

Where the tape comprises a plurality of laminated layers, the tape side surface is defined by the laminated edge (e.g., Fig. 5, at 58) which extends between upper and lower tape layers (Fig. 5, 56). Multiple tape windings are aligned along tape side surfaces and the at least one substantially air impermeable layer is positioned on the laminated edge between the adjacent ePTFE tape side surfaces. The substantially air impermeable layer extends from the upper tape layers to the lower tape layers of the tape. Preferably, the air impermeable layer extends substantially completely between the upper and lower tape layers, e.g. generally in the x-z plane of the tape, for the entire length of the wound tape. Preferred gaskets comprise multilayered porous multiaxially expanded PTFE tape having upper and lower laminate tape layers in the x-y plane of the tape, that define upper and lower gasket surfaces. Where gasket comprises monolithic porous ePTFE tape, upper and lower tape surfaces in the x-y plane of the tape correspond to, or define the upper and lower gasket surfaces. Alternating windings of at least one ePTFE tape and at least one substantially air impermeable layer are wound so that the plane of expansion of the ePTFE tape is in the x-y plane of the tape. The plane of expansion is oriented substantially parallel to upper and lower gasket surfaces of an uncompressed gasket providing strength in at least both the circumferential and radial directions.

As illustrated in Fig. 1a and 1b, where tape side surfaces are perpendicular to the upper and lower gasket surfaces, the air impermeable layer joined thereto extends substantially along the x-z plane of the tape preventing the flow of liquid in the radial direction through the gasket. The length of the tape forming the windings of the inventive gasket prevents leakage through the longitudinal direction of the tape. Preferred gaskets of the present invention have a substantially uniform thickness across the width of an uncompressed gasket. Therefore, uncompressed gaskets of the present invention preferably have a uniform thickness across the upper and lower gasket surfaces between inner and outer gasket diameters.

The novel gaskets of the present invention are preferably formed from the following novel methods.

A process is provided comprising the steps of providing a length of at least one porous ePTFE tape having upper and lower tape layers or surfaces, and side surfaces extending between upper and lower tape layers or surfaces, and providing at least one material capable of forming a substantially air impermeable layer. The method further comprises coiling the at least one ePTFE tape and the at least one material capable of forming a substantially air impermeable materials, forming alternating windings of the ePTFE tape and the at least one material capable of forming a substantially air impermeable layer at increasing distances around a center point, and joining the alternating windings to form a unitary structure of the at least one ePTFE tape and the at least one substantially air impermeable layer.

The at least one ePTFE tape and at least one substantially air impermeable layer are coiled or wound around a form defining the inner periphery of a gasket, such as a die, forming alternating windings. Tape is aligned along the tape side surfaces with the at least one substantially air impermeable layer interposed between the ePTFE tape windings. The at least one ePTFE tape is preferably aligned wherein upper and lower tape layers or surfaces, and the plane of expansion of the ePTFE, are both in the x-y plane of the gasket. The method further comprises joining the windings of the at least one ePTFE tape and the at least one substantially air impermeable layer along tape side surfaces. A unitary gasket is formed comprising at least two windings of at least one ePTFE tape around an inner periphery, each ePTFE winding alternated with at least one substantially air impermeable material. In a preferred embodiment, at least one substantially air impermeable layer is first formed or bonded on the two side surfaces of at least one porous ePTFE tape prior to winding at least one ePTFE tape to form a gasket. A method for forming or bonding the substantially air impermeable layer on the ePTFE tape side surfaces comprises the steps of providing a length of tape having upper and lower surfaces or layers and tape side surfaces extending the length of the tape between upper and lower surfaces or layers; providing a material capable of forming a substantially air impermeable layer; aligning the material along the length of the ePTFE tape on the tape side surface; and forming the substantially air impermeable layer on the two ePTFE tape side surfaces.

The substantially air impermeable material is a melt processable fluoropolymer and the step of forming or bonding the at least one substantially air impermeable layer to the ePTFE tape comprises the steps of contacting at least one ePTFE side surface and the at least one substantially air impermeable material; applying pressure and heating the side surface of the porous ePTFE tape and the at least one substantially air impermeable material above the melt temperature of the porous ePTFE and the at least one material to weld the heated material and the porous ePTFE together. Sufficient pressure is applied to bond the ePTFE tape side surface and the material, forming a substantially air impermeable layer on the side surface of the tape. Each of the steps of forming a substantially air impermeable layer on at least one ePTFE tape side surface, including the steps of 1) contacting the ePTFE tape side surface and the at least one material capable of forming a substantially air impermeable layer, and 2) applying heat and 3) pressure to the materials, may be performed simultaneously or sequentially. Further, a substantially air impermeable layer may be formed on at least one ePTFE tape side surface as a step-wise process for a portion of a tape length, or as a continuous process along the entire desired length of the tape.

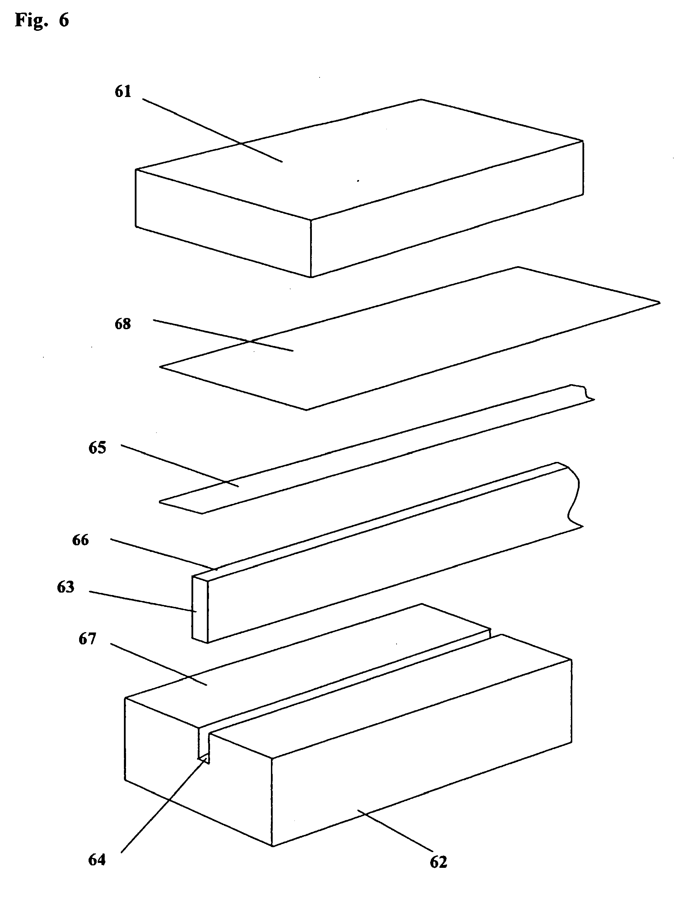

A release layer may be provided between the material capable of forming the air impermeable layer and the pressure and/or heat source to prevent sticking. The substantially air impermeable material is bonded to a desired length of the porous ePTFE tape, which is preferably the entire tape length used to form a gasket. Fig. 6 illustrates a portion of a hot press assembly and a method for welding a substantially air impermeable layer on to the side surface of an ePTFE tape.

Alternately, but not claimed the material capable of forming a substantially air impermeable layer may, for example, be coated onto the side surface of an ePTFE tape along the length of at least one tape. Coating may be accomplished by any means, such as spraying, brushing, or powder coating.

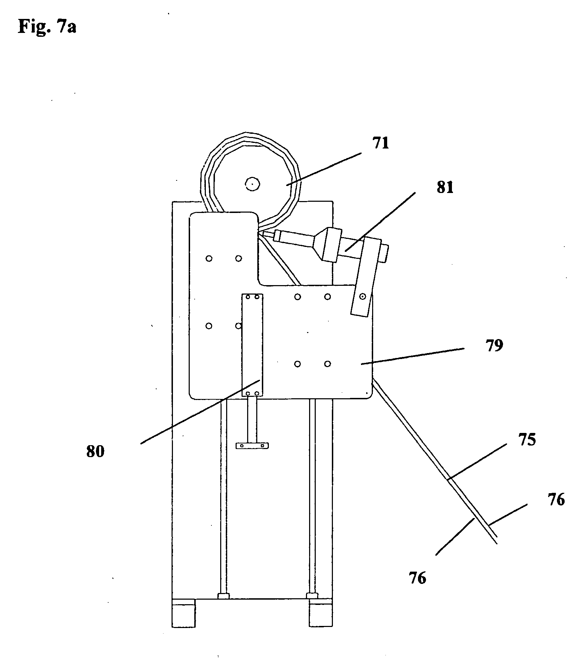

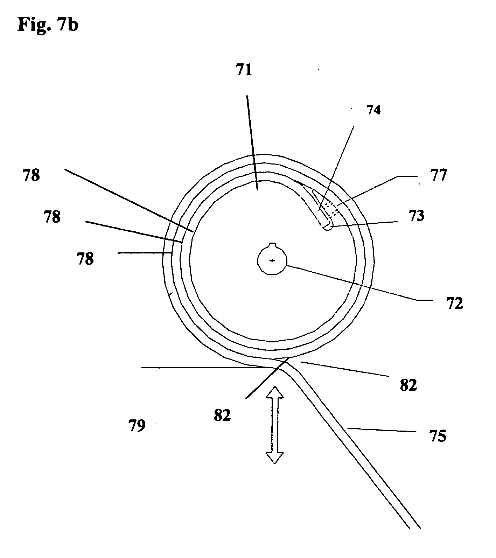

Preferred methods of forming a gasket comprising alternate windings of at least one porous ePTFE tape and at least one substantially air impermeable layer preferably comprises the steps of providing a length of porous ePTFE tape having a substantially air impermeable material layer along the length of the tape; winding the ePTFE tape around a form or a die; applying heat at a juncture of two sequential ePTFE tape windings, contacting and applying pressure and joining sequential windings until the desired width of the gasket is formed. Fig.7 illustrates a portion of a fixture for winding and welding the at least one ePTFE tape and at least one substantially air impermeable layer to form a gasket. Preferably, where the substantially air impermeable layer is applied to both side surfaces of at least one porous ePTFE tape, the heating step comprises applying heat at a juncture of two substantially air impermeable layers of sequential ePTFE windings, above the melt temperature of the substantially air impermeable layer. The method further comprises applying pressure to weld the two substantially air impermeable layers together to join the sequential ePTFE windings.

The preferred steps of forming the gasket including the steps of 1) winding at least one ePTFE tape around a die, 2) applying heat at a juncture of the windings of the at least one ePTFE tape side surfaces having the substantially air impermeable layer bonded thereto, and 2) contacting and 3) applying pressure to the heated ePTFE side surfaces to weld the ePTFE windings, may be performed simultaneously, or sequentially. Further, the steps of forming the gasket may be performed step-wise or as a continuous process until the desired geometry of the gasket is formed.

In another embodiment, the steps of forming a substantially air impermeable layer on ePTFE side surfaces and the steps of winding the ePTFE tape and joining the ePTFE windings are combined in one continuous process.

Gaskets and methods of forming the materials of the present invention are exemplified, but not limited, by the examples presented below.

## EXAMPLES

## Example 1

An ePTFE/PFA coil gasket of the present invention was produced in the following manner.

A length of approximately 6 meters (20 feet) of Gore-Tex® Series 600 Gasket Tape (ePTFE tape) having a nominal width of approximately 10 mm (0.39 inches) and a nominal thickness of approximately 6 mm (0.23 inches) was obtained from W.L. Gore & Associates, Inc. of Newark, DE. A Teflon® PFA Film, Type LP having a width of approximately 13 mm (0.5 inches) and a thickness of approximately 0.025 mm (0.001 inches) was obtained from E.I. du Pont de Nemours, Inc. of Wilmington, Delaware.

The PFA film was welded to the two side surfaces of the ePTFE tape along the entire length of the ePTFE tape. The PFA film was welded to the first side surface of the ePTFE tape using a hot press substantially similar to the press illustrated in Fig. 6 with upper press platen 61 heated to about 375°C and the lower press platen 62 kept at ambient temperature. The upper and lower press platens 61 and 62 had a length of approximately 200 mm (8 inches). Therefore, 200 mm sections of the ePTFE tape were coated at a time. The ePTFE tape 63 was placed in a channel 64 in the lower platen with the side surface 66 of the ePTFE tape extending approximately 0.25 mm to 0.5 mm above the top surface of the lower platen 62. The PFA film 65 was placed on the side surface of the ePTFE tape and centered. Kapton® polyimide film 68 was obtained from E.I. du Pont de Nemours, Inc. of Wilmington, Delaware. A piece of the Kapton® film 68 was placed on top of the PFA film 65 as a release layer to prevent the PFA from sticking to the heated upper platen 61. The upper platen 61 was lowered with sufficient pressure being applied so that the upper platen 61 was in contact with the lower platen 62. The upper platen 61 was held in place for approximately five seconds and then lifted from the lower platen 62 . The Kapton® film 68 was removed from the formed ePTFE/PFA composite tape. The ePTFE/PFA composite tape was removed from the channel in the lower platen and the next 200 mm section of the ePTFE tape was inserted and the lamination process was repeated. After the entire length of the ePTFE tape was coated on the one side surface with the PFA film, the excess PFA film was trimmed from the ePTFE/PFA composite tape using a razor blade. The opposite side surface of the ePTFE tape was coated with the PFA film following the same procedures as above. The excess PFA film was trimmed from the ePTFE/PFA composite tape using a razor blade.

An assembly for making a gasket is illustrated in Figs. 7a and 7b. A circular die 71 was provided to a drive shaft 72, the die 71 having a diameter of about 203 mm (8 inches []) and a slot 73 for receiving an end of a tape. One end 74 of the ePTFE/PFA composite tape 75 was secured in the die 71 by placing the end of the tape in the slot and tightening set screws 77. One of the PFA coated side surfaces 76 of the composite tape was in contact with the edge of the die corresponding to the circumference. The die was rotated through one revolution creating the first winding 78 around the circumference of the die. A lower tape guide 79 was positioned to apply pressure in the direction indicated by the arrows of Fig. 7b to the tape via the air cylinder 80. The air cylinder pressure was set to 8 psig (55 kPa). A Leister Hot Jet S hot air gun 81 (Leister Process Technologies, Samen, Switzerland was positioned so that the tip of the nozzle was located approximately 6 mm from the juncture 82 of the ePTFE tape windings. The hot air gun was set to a temperature setting of 6 (maximum) corresponding to a rated temperature of about 600°C and air flow setting of 4 (maximum) corresponding to a rated air flow of about 80 liters/min. The die rotational speed was set to approximately 0.25 rpm [using the speed control potentiometer on the drive system (Rapid-Air, Rockford, IL).] The PFA of each side surface was melted by the hot air 82 and the side surfaces of adjacent ePTFE tape windings 75 and 78 each having melted PFA were contacted to bond the tape side surfaces. The coiling process continued until approximately six windings 78 had been wound around the die. The lower tape guide 79 was lowered and the die and coiled composite gasket were removed from the drive shaft.

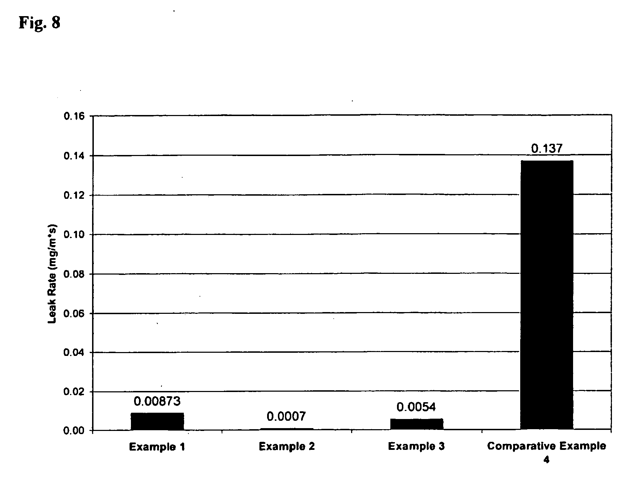

The coiled gasket having alternating winding of porous ePTFE and air impermeable PFA was formed and trimmed to final inner and outer diameter dimensions of about 220 mm (8.66 inches) and about 273 mm (10.75 inches), respectively, using a LMI Laser Cutter. The gasket had a final thickness of about 6.6 mm (0.26 inches) and a mass of approximately 131 g. The composite gasket made according to this example was tested for sealability in accordance with the procedures of the Sealability Test described herein. The results can be seen in Fig. 8.

### Example 2

An ePTFE/PFA composite coil gasket of the present invention was produced substantially according to the procedures described in Example 1.

The gasket was trimmed to final inner and outer diameter dimensions of about 220 mm (8.66 inches) and about 273 mm (10.75 inches). The gasket had a final thickness of about 6.9 mm (0.27 inches) and a mass of approximately 138 g. The composite gasket made according to this example was tested for sealability in accordance with the procedures of the Sealability Test described herein. The results can be seen in Fig. 8.

### Example 3

An ePTFE/PFA composite coil gasket of the present invention was produced substantially according to the procedures described in Example 1.

The gasket was trimmed to final inner and outer diameter dimensions of about 220 mm (8.66 inches) and about 273 mm (10.75 inches). The gasket had a final thickness of about 6.6 mm (0.26 inches) and a mass of approximately 106 g. The composite gasket made according to this example was tested for sealability in accordance with the procedures of the Sealability Test described herein. The results can be seen in Fig. 8.

### Comparative Example 4

A GORE-TEX GR® sheet gasketing gasket having an inner diameter of approximately 220 mm (8.66 inches), an outer diameter of approximately 273 mm (10.75 inches), a thickness of 5.8 mm (0.23 inches), and a mass of 76 g was obtained from W.L. Gore & Associates, Inc. of Newark, Delaware.

The gasket according to this example was tested for sealability in accordance with the procedures of the Sealability Test described herein. The results can be seen in Fig. 8.

### Example 5

An ePTFE/FEP composite coil gasket of the present invention was produced substantially according to the procedures described in Example 1 with the following exceptions. The initial width of the ePTFE tape was approximately 20 mm (0.79 inches). A 13 mm wide FEP film was obtained from E.I. du Pont de Nemours, Inc. of Wilmington, Delaware and bonded to the two side surfaces of the ePTFE in accordance with the procedures described in Example 1 for forming the composite tape. The excess FEP was trimmed from the tape using a razor blade. The diameter of the die used was about 430 mm (17 inches). The die rotational speed was set to about 0.1 revolutions per minute. Approximately five windings of the composite tape were coiled around the die and bonded using the hot air gun settings as in Example 1. A gasket having alternating rotations of ePTFE and air impermeable FEP was formed, and trimmed to final inner and outer diameters of about 435 mm and 537 mm, respectively, using a general purpose gasket cutter.

The gasket had a final thickness of about 6 mm (0.25 inches). The gasket was tested for leakage in accordance with the-procedures of the Leakage Test described herein. The results can be found in Table 1.

Table 1: Leakage Test Results

| Sample ID | Leakage Measurements (mg/m/s) | | |
|---|---|---|---|
| | 1 | 2 | 3 |
| Example 5 | 0.0121 | - | 0.0086 |
| Comparative Example 6 | 2.41 | - | 1.25 |

### Comparative Example 6

A sample of GORE-TEX® Series 600 Gasket Tape as represented by Fig. 5 was obtained from W.L. Gore & Associates, Inc. of Newark, DE having a nominal thickness of 6 mm and a nominal width of 55 mm and length of approximately 1800 mm. A double-sided pressure sensitive adhesive having a width of about 25 mm was applied to one surface of the tape along the length of the tape and centered between the two edges. The pressure sensitive adhesive was a styrene butadiene rubber (SBR) based adhesive with a polyester carrier film and with a release paper on one side.

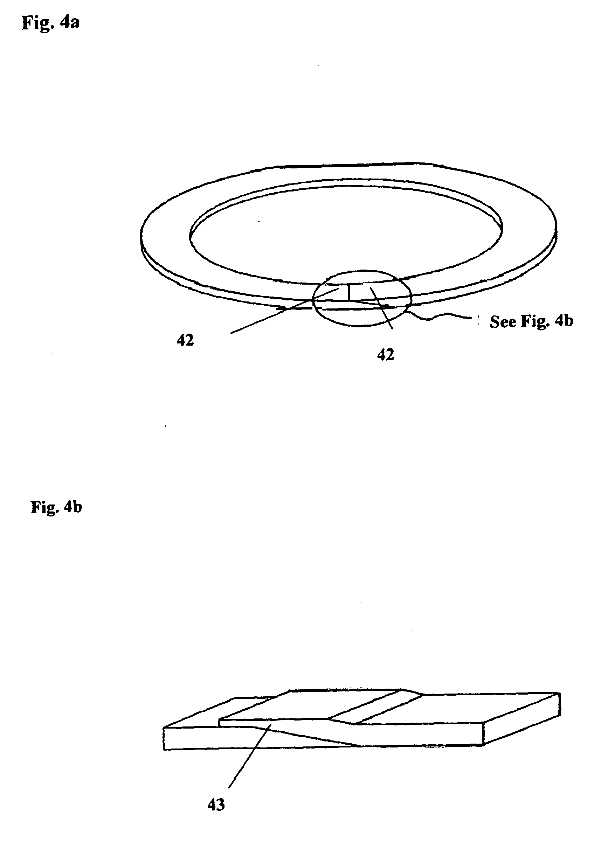

The tape was formed into a gasket as illustrated in Figs. 4a and 4b, with the longitudinal ends 42 joined by a skive cut 43. The gasket was tested for leakage in accordance with the procedures of the Leakage Test described herein. The results can be found in Table 1.

**TEST METHODS AND PROCEDURES**

**Sealability Test Procedures**

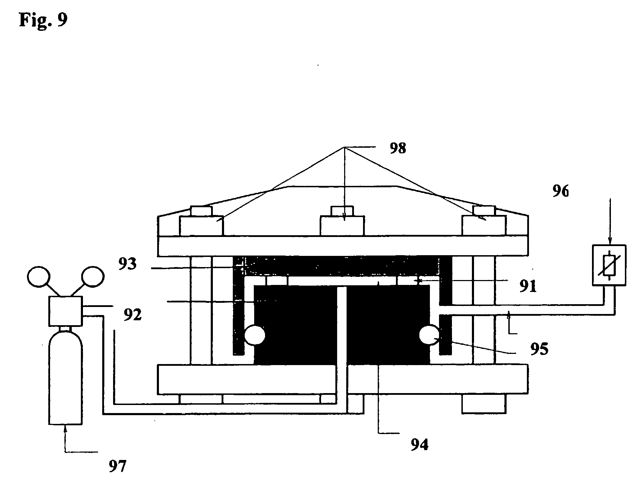

The sealability of gaskets made substantially according to Examples 1-3 and Comparative Example 4 was determined by measuring leak rates using a computer controlled, hydraulically driven test fixture, as seen in Fig. 9. Gaskets 91 were installed in the test fixture on the lower platen 92. The gasket samples were compressed by hydraulic press 98 between the upper 93 and lower 92 platens to a stress of about 6 MPa. The internal pressure in the high pressure zone 94 was increased to about 27 bar using nitrogen gas as supplied by the compressed air bottle 97 as the test fluid. The internal pressure was maintained in the high pressure zone throughout the test period. As the nitrogen gas leaked past the gasket sample, the pressure in the low pressure zone 95 increased. The change in pressure in the low pressure zone was monitored by the pressure differential switch 96. The leak rate was calculated by the test fixture's software program based on the change in pressure in the low-pressure zone after a 90 minute (5400 second) dwell time and based on the following equation:

$$LR = (\rho_{nitrogen} \; x \; V_o \; x \; \Delta P)/(d \; x \; \Pi \; x \; \Delta t \; x \; p_{atm})$$

where:

LR =            leak rate (mg/m x sec)
nitrogen =      density of nitrogen at ambient conditions ($mg/cm^3$)
$V_o$ =            volume within test flange ($cm^3$)
d =            average gasket diameter (m, meters)

$$d = (outer \; diameter + inner \; diameter)/2$$

$\Delta P$ =            change in internal pressure in the low pressure zone = $P_o$ - Pf

$$P_o = initial \; internal \; pressure \; at \; t = 0 \; seconds \; (bar)$$

$$P_f = final \; pressure \; at \; t = \Delta t \; (bar)$$

$\Delta t$ =            test time (seconds)
$p_{atm}$ =            atmospheric pressure (bar)

The leak rates for each example tested can be seen in Fig. 8. The graph shows that all of the inventive examples tested, Examples 1 through 3, had significantly lower leak rates than the comparative example. A decrease in leak rate of at least about 1.5 orders of magnitude was realized with the inventive examples having substantially air impermeable layers as compared with Comparative Example 4 which is an ePTFE gasket without any impermeable layers interposed therein. The lower leak rate demonstrated by the inventive examples is attributable in part to the incorporation of the substantially air impermeable layer(s) oriented substantially perpendicular to the sealing surfaces in the gasket, and further, to the substantially parallel orientation of the plane of expansion of the expanded PTFE with the flange surface.

**Leakage Test Procedures: Glass Lined Steel Test Fixture**

The leakage behavior of gaskets made substantially according to Examples 5 and Comparative Example 6 were tested on an actual glass lined steel flange through a thermal cycle. The inner and outer diameters of the glass lined steel flanges were approximately 430 mm and 520 mm, respectively. Test gaskets were installed on the lower flange. The ePTFE tape in Comparative Example 6 was installed using the skive cut overlapping technique taught in U.S. Patent No. 5,964,465 to Mills et al. The first end of the tape samples were skive cut on a diagonal with a skive length of about 50 mm. The release paper was removed from the adhesive on the tape samples. The adhesive layer held the tapes in position as the tape was being formed around the lower flange. The trailing end of the tape was positioned on top of the skive cut on the leading end of the tape. The second skive cut was made on the trailing end of the tape so that a smooth transition was created at the overlap of the leading and trailing ends of the tape. The upper flange was positioned on top of the gasket and aligned with the lower flange. The flanges were bolted together using twelve M24 clamps. The clamps were tightened to a torque of 111 N-m generating a line force load an the gasket of approximately 200N/mm. The line force is equal to the total force on the gasket supplied by the tightening of the clamps divided by the average circumference of the gasket. The average circumference is determined by multiplying the average diameter of the gasket [(gasket outside diameter + gasket inside diameter)/2] by pi. Ten minutes after the initial torque, the clamps were retightened to 111 N-m. The internal pressure was then increased to 6 bar using compressed air. After a 24 hour dwell under pressure at ambient temperature, the first leakage measurement was recorded. The fixture was then loaded in to an oven and re-pressurized to 6 bar with compressed air. The temperature of the oven was set to 200°C for a period of 16 hours. After cooling to room temperature, the second leakage measurement was recorded. The clamps were then retightened to 111 N-m to reestablish the 200 N/mm line force on the gasket. The fixture was re-pressurized to 6 bar with compressed air. The third and final leakage measurement was then taken. The leak rates were determined based on the change in internal pressure in the test fixture as measured by a differential pressure switch according to the following equation:

$$LR = (\rho air \times V_o \times \Delta P)/(d \times \Pi \times \Delta t \times p_{atm})$$

where:

LR = leak rate (mg/m x sec)
$\rho_{air}$ = density of air at ambient conditions (mg/cm$^3$)
$V_o$ = volume within test flange (cm$^3$)
d = average gasket diameter (m, meters)

$$d = (outer\ diameter + inner\ diameter)/2$$

$\Delta P$ = change in internal pressure = $P_o$ - Pf

$$P_o = initial\ internal\ pressure\ at\ t = 0\ seconds\ (bar)$$

$$P_f = final\ pressure\ at\ t = \Delta t\ (bar)$$

$\Delta t$ = test time (seconds)
$p_{atm}$ = atmospheric pressure (bar)

The leak rates measured for each example can be seen in Table 1. The results in Table 1 show that after the 24 hour dwell at room temperature the inventive example (Example 5) had significantly lower leak rate as compared with Comparative Example 6. After the 16 hour dwell at 200°C, all of the gaskets experienced gross leakage (pressure change too large to be measured by the differential pressure switch). After the re-tightening of the clamps back to the 111 N-m torque, the inventive example again had significantly less leakage than the comparative example.

**Wide-Angle X-ray Scattering Measurements**

The plane of expansion of a multiaxially expanded PTFE gasket tape material was verified with wide-angle X-ray scattering measurements.

Samples of gasket tape material were cut from a length of GORE-TEX® Series 300 Gasket Tape with a nominal thickness of 3 mm. The GORE-TEX® Series 300 Gasket Tape material is comprised of multiple layers of a biaxially expanded PTFE membrane laminated together in the thickness direction. The ePTFE membrane layers are expanded in the longitudinal (x-direction) and transverse (y-direction) directions with the thickness oriented with the z-direction. Therefore, the plane of expansion is the x-y plane of the membrane and the Gasket Tape.

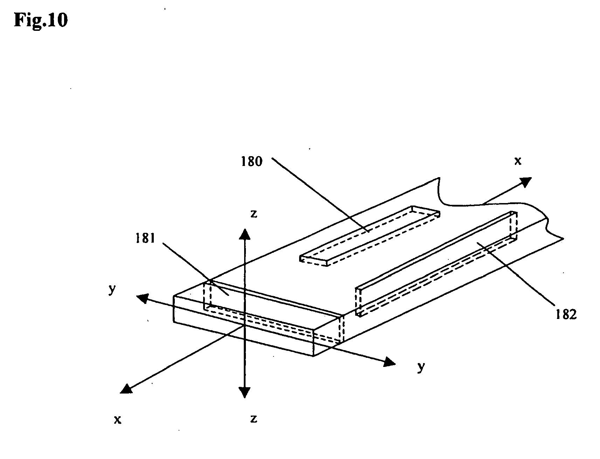

As illustrated in Fig. 10 test samples were cut parallel to the x-y plane 180, y-z plane 181 and the x-z plane 182 from the GORE-TEX Series 300 Gasket Tape. Four rectangular samples were cut using an LMI Laser Cutter from each planar orientation to approximately 3 mm by 15 mm by 0.5 mm. For the samples cut from the x-y plane 180, membrane layers were removed from a section of the nominally 3 mm thick tape to produce a tape section with a nominal thickness of 0.5 mm. From this 0.5 mm thick section, the rectangular test samples were cut to a width and length of about 3 mm and 15 mm, respectively, with the sample width parallel to the Gasket Tape width (y-direction) and the sample length parallel to the Gasket Tape length (x-direction). In these samples, the plane defined by the sample length and width (x-y plane) is parallel to the membrane layers and the plane of expansion of the ePTFE.

For the test samples cut in the x-z plane 182, two parallel cuts, approximately 0.5 mm apart, were made in the x-direction of the 3 mm thick Gasket Tape material. From this 0.5 mm wide and 3 mm thick section the 15 mm long test samples were cut. For these samples, the 3 mm by 15 mm area defined the x-z plane.

For the test samples cut in the y-z plane 181, two parallel cuts, approximately 0.5 mm apart, were made in the y-direction of the 3 mm thick Gasket Tape material. From this 0.5 mm wide and 3 mm thick section the 15 mm long test samples were cut. For these samples, the 3 mm by 15 mm area defined the y-z plane.

All measurements were made in transmission mode using a Rigaku R-Axis IV Image Plate X-ray Analyzer mounted on a Rigaku Ultra 18 kW rotating anode x-ray generator with a graphite monochromator and a 0.3mm pinhole collimator. Operating conditions on the generator for all experiments were 50kV and 200mA. Radiation type was Cu $K_\alpha$. Sample-to-detector distance was set at approximately 120 mm, and calibrated using a silicon powder standard. All measurements were made on a temperature-controlled stage maintained at approximately $24\pm1°C$. Two-dimensional image data was processed using Rigaku R-Axis image processing software to obtain I vs. 2θ scans. The scans were collected by radial integration over the angular range from 2θ~0° to 2θ~55° in increments of Δ2θ=0.044°.

The I vs. 2θ scans were processed using Jade 6.1 XRD Pattern Processing & Identification software purchased from Materials Data, Inc. The data processing procedure was as follows. Scans and associated air scattering background files were read into the software and scaled to match maximum intensity counts in the range or 2θ=6°-8°. The air scattering file was then used to define the scattering background and subtracted from the I vs. 2θ scans obtained from the samples. Finally, the position and intensity of the primary scattering peaks were identified using the software's standard peak search routine. It should be noted that the data was originally collected in two-dimensional form, and was analyzed without any correction into a form that would be directly analogous to data collected with a linear detector.

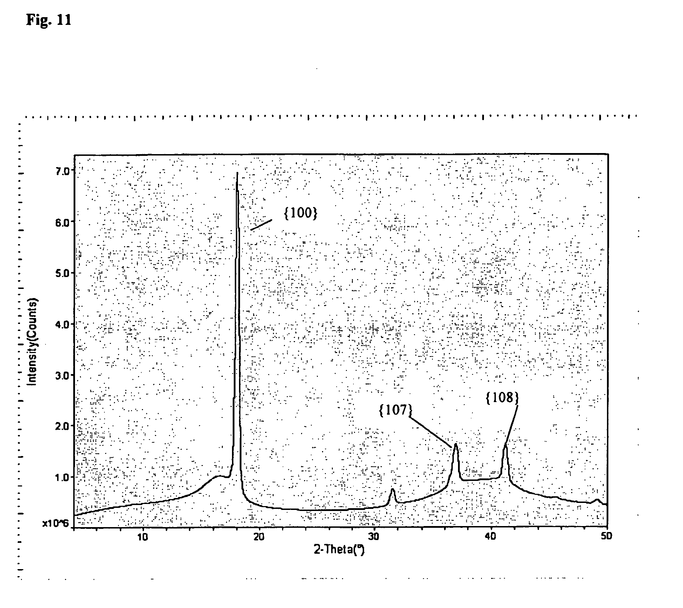

A typical I vs. 2θ diffraction scan is shown in Fig. 11. All scans show the characteristic diffraction peaks of polytetrafluoroethylene. The strongest peak, occurring near 2θ=18.1°, is attributable to the {100} crystalline planes. The next most intense diffraction peaks occur near 2θ=37.1° and 2θ=41.4°, and are attributed to the {107} and {108} crystalline planes, respectively (see Eduard S. Clark, "Unit Cell Information on Some Important Polymers, " Chapter 30, Physical Properties of Polymers Handbook, James E. Mark, Ed. New York,: American Institute of Physics, 1996).

The GORE-TEX® Series 300 Gasket Tape material is comprised of multiple layers of a biaxially expanded PTFE membrane laminated together in the thickness direction. Orientation, or texture, is developed in the PTFE within the membrane during expansion that is retained within the Gasket Tape. Due to this texture, the relative intensity of the {100} and {108} peaks in diffraction scans obtained from the samples of the Gasket Tape is a function of the physical orientation of the sample relative to the thickness direction of the Gasket Tape.

When Gasket Tape samples are measured with the x-ray beam incident on the sample face in a direction that is perpendicular to the plane of expansion (x-y plane), the intensity of the {108} peak relative to the intensity of {100} peak is higher than for samples measured in other orientations. For example, in the case where the samples were cut parallel to x-y plane and measured with the x-ray beam perpendicular to the x-y plane (parallel to the z direction), the I vs. 2θ diffraction scans show higher relative {108} peak intensities than scans from samples cut in the x-z and y-z planes and measured with the x-ray beam perpendicular to those faces (parallel to the y direction, and parallel to the x direction, respectively). This is illustrated in Table 2, in which data are presented from the analysis of I vs. 2θ diffraction scans for twelve (12) samples, four (4) cut from three (3) different orientations relative to the thickness direction of the Gasket Tape. In Table 3, the relative {108} peak intensity is reported as a percentage of the {100} peak intensity, to normalize for sample-to-sample variation in thickness, density, or measurement time. As illustrated in Fig, 10 and noted in Table 2, samples with x-z orientation were measured such that the x-ray beam was incident on the x-z face in a direction parallel to the y-direction. Similarly, samples with y-z orientation were measured such that the x-ray beam was incident on the y-z face in a direction parallel to the x-direction, and samples with x-y orientation were measured such that the x-ray beam was incident on the x-y face in a direction parallel to the z direction. Samples were cut and positioned such that the x-ray beam was incident on the 3 mm by 15 mm face.

**Table 2.**

| Sample | Plane | Beam Direction | {108} Peak Intensity (% of {100} Peak) |
|--------|-------|----------------|----------------------------------------|
| 1 | x-y | parallel to z | 35.7 |
| 4 | x-y | parallel to z | 32.5 |
| 7 | x-y | parallel to z | 32.9 |
| 12 | x-y | parallel to z | 33.3 |
| 2 | y-z | parallel to x | 6.2 |
| 6 | y-z | parallel to x | 6.5 |
| 9 | y-z | parallel to x | 6.1 |
| 10 | y-z | parallel to x | 5.7 |
| 3 | x-z | parallel to y | 13.5 |
| 5 | x-z | parallel to y | 12.2 |
| 8 | x-z | parallel to y | 12.1 |
| 11 | x-z | parallel to y | 13.2 |

In Table 2, the {108} relative peak intensity, expressed as a percentage of the corresponding {100} peak intensity within a single I vs. 2θ x-ray scan, is given for the variety of gasket sections. Samples 1, 4, 7, and 12 which were measured in the x-y orientation with the x-ray beam parallel to the z direction have significantly higher relative {108} diffraction intensities than the samples measured in the x-z orientation or in the y-z orientation with the x-ray beam directed as stated above. Thus, the highest {108} relative peak intensity is measured for samples positioned such that the x-ray beam is incident on the sample in a direction 1 perpendicular to the plane of expansion of the biaxially expanded PTFE membrane layers. Therefore, comparison of {108} relative peak intensities in different orientations can be used to identify the plane of expansion of ePTFE in a Gasket Tape.

**Claims**

1.  A gasket comprising:

    an inner diameter (9); and
    at least two joined spirals comprising alternating rotations of at least one porous multilayer expanded PTFE tape (18) and at least one substantially air impermeable layer (11) rotating in an increasing distance around the inner diameter;

    wherein the expanded PTFE tape has upper and lower tape layers (56), and side surfaces (58) extending between the upper and lower tapes layers,
    wherein the alternating rotations of the at least one expanded PTFE tape and at least one substantially air impermeable layer are joined at the expanded PTFE tape side surfaces by the at least one substantially air impermeable layer, and
    wherein the upper and lower tape layers and the plane of expansion of the at least one expanded PTFE tape are in the x-y plane of the gasket, the plane of expansion of the ePTFE tape and the x-y plane of the tape and gasket being oriented parallel to upper and lower gasket surfaces of an uncompressed gasket.

2.  The gasket of claim 1, wherein the upper and lower tape layers define upper and lower gasket surfaces.

3.  The gasket of claim 1, wherein the gasket when uncompressed has a substantially uniform thickness across upper and lower gasket surfaces.

4.  The gasket of claim 1, wherein the ePTFE (18) has a density of less than 1.8 g/cc, less than 1.2 g/cc, or less than 1.0 g/cc.

5. The gasket of claim 1, wherein at least a portion of the ePTFE tape (18) is monoaxially expanded, or multiaxially expanded.

6. The gasket of claim 1, wherein at least one expanded polytetrafluoroethylene (ePTFE) layer (18) comprises at least one filler.

7. The gasket of claim 6, wherein the at least one filler comprises at least one material selected from metals, semi-metals, metal oxide, glasses, ceramics, activated carbons, carbon blacks, polymer resins, silica, barium sulfate, graphite, and glass beads.

8. The gasket of claim 1, wherein the at least one substantially air impermeable layer comprises:

   a fluoropolymer;
   a melt processable fluoropolymer;
   tetrafluoroethylene/perfluoroalkyl vinyl ether copolymer (PFA);
   tetrafluoroethylene/hexafluoropropylene copolymer (FEP);
   polytetrafluoroethylene (PTFE), densified expanded polytetrafluoroethylene, or both; or
   at least one of PFA or FEP in combination with ePTFE.

9. The gasket of claim 1, wherein the at least one substantially air impermeable layer (11) extends substantially completely between upper and lower tape layers (56), or extends beyond upper and lower tape layers.

10. The gasket of claim 1, wherein the at least one substantially air impermeable layer (11) has a permeability to air less than the expanded polytetrafluoroethylene (ePTFE) (18).

11. A method of forming a gasket comprising joined spirals of ePTFE tape and a fluoropolymer layer comprising the steps of:

   a. providing a length of a porous multilayered expanded PTFE tape (18) having upper and lower tape layers (56), and side surfaces (58) extending the length of the tape between the upper and lower layers, wherein the plane of expansion of the expanded PTFE is in the x-y plane of the gasket, the plane of expansion of the ePTFE tape and the x-y plane of the tape and gasket being oriented parallel to upper and lower gasket surfaces of an uncompressed gasket
   b. providing a melt processable fluoropolymer comprising at least one of FEP and PFA;
   c. forming a fluoropolymer layer on the two ePTFE tape side surfaces comprising the steps of contacting the ePTFE side surfaces and the melt processable fluoropolymer, heating the expanded PTFE tape side surfaces and the melt processable fluoropolymer above the melt temperature of the ePTFE and the fluoropolymer, and applying pressure to weld the heated expanded PTFE side surfaces and fluoropolymer; and
   d. forming alternating rotations of the expanded PTFE tape and fluoropolymer at an increasing distance around a die outer diameter comprising the steps of winding the expanded PTFE tape comprising the fluoropolymer layers around a die for a complete rotation, winding and applying heat at a juncture of two fluoropolymers layers above the fluoropolymer melt temperature for subsequent rotations, contacting the heated fluoropolymer, and applying pressure to fuse the two fluoropolymer layers and join rotations of the expanded PTFE along tape side surfaces.

12. The method of claim 11, wherein the step of contacting the ePTFE tape (18) and the melt processable fluoropolymer comprises the step of coating at least one side surface (58) of the ePTFE tape along the length of the tape with the melt processable fluoropolymer.

13. The method of claim 11, wherein the density of the ePTFE is less than 1.8 g/cc, or less than 1.2 g/cc.

14. The method of claim 11, wherein the upper and lower tape layers (56) correspond to upper and lower gasket surfaces.

15. The method of claim 11, wherein the gasket is uncompressed and has a substantially uniform thickness across upper and lower gasket surfaces.

16. The method of claim 11, wherein the gasket is circular or non-circular.

**Patentansprüche**

1. Dichtung umfassend:

   einen Innendurchmesser (9); und
   mindestes zwei verbundene Spiralen, umfassend abwechselnde Rotationen von mindesten einem porösen, mehrschichtigen Band aus expandiertem PTFE (18) und mindestens eine im Wesentlichen luftundurchlässige Schicht (11), die sich in einem zunehmenden Abstand um den Innendurchmesser dreht;

   wobei das Band aus expandiertem PTFE obere und untere Bandschichten (56) und Seitenflächen (58) aufweist, die sich zwischen den oberen und unteren Bandschichten erstrecken,
   wobei die abwechselnden Rotationen des mindestens einen Bands aus expandiertem PTFE und der mindestens einen im Wesentlichen luftundurchlässige Schicht an den Seitenflächen des Bands aus expandiertem PTFE durch die mindestens eine im Wesentlichen luftundurchlässige Schicht verbunden sind und
   wobei die oberen und unteren Bandschichten und die Ausdehnungsebene des mindestens einen Bands aus expandiertem PTFE sich in der x-y-Ebene der Dichtung befinden, wobei die Ausdehnungsebene des Bands aus ePTFE und die x-y-Ebene des Bands und der Dichtung parallel zu den oberen und unteren Dichtungsflächen einer umkomprimierten Dichtung orientiert sind.

2. Dichtung nach Anspruch 1, wobei die oberen und unteren Bandschichten obere und untere Dichtungsflächen definieren.

3. Dichtung nach Anspruch 1, wobei die Dichtung im unkomprimierten Zustand eine im Wesentlichen gleichförmige Dicke über die oberen und unteren Dichtungsoberflächen aufweiset.

4. Dichtung nach Anspruch 1, wobei der ePTFE (18) eine Dichte von weniger als 1,8 g/cm$^3$, weniger als 1,2 g/cm$^3$ oder weniger als 1,0 g/cm$^3$ aufweist.

5. Dichtung nach Anspruch 1, wobei mindestens ein Teil des Bands aus ePTFE (18) monoaxial verstreckt oder multiaxial verstreckt ist.

6. Dichtung nach Anspruch 1, wobei mindestens eine Schicht aus expandiertem Polytetrafluorethylen (ePTFE) (18) mindestens einen Füllstoff umfasst,

7. Dichtung nach Anspruch 6, wobei der mindestens eine Füllstoff mindestens ein Materials umfasst, ausgewählt unter Metallen, Halbmetallen, Metalloxiden, Glasarten, Keramikarten, Aktivkohleartenarten, Rußarten, Polymerharzen, Siliciumdioxid, Bariumsulfat, Graphit und Glasperlen,

8. Dichtung nach Anspruch 1, wobei die mindestens eine im Wesentliche luftundurchlässige Schicht Folgendes umfasst:

   ein Fluorpolymer;
   aus der Schmelze verarbeitbares Fluorpolymer;
   Tetrafluorethylen/Perfluoralkylvinylether-Copolymer (PFA);
   Tetrafluorethylen/Hexafluorpropylen-Copolymer (FEP);
   Polytetrafluorethylen (PTFE), verdichteten expandierten Polytetrafluorethylen oder beides; oder
   mindestens eines von PFA oder FEP in Kombination mit ePTFE.

9. Dichtung nach Anspruch 1, wobei die mindestens eine im Wesentlichen luftundurchlässige Schicht (11) sich im Wesentlichen vollständig zwischen oberen und unteren Bandschichten (56) erstreckt oder sich über die oberen und unteren Bandschichten hinaus erstreckt.

10. Dichtung nach Anspruch 1. wobei die mindestens eine im Wesentlichen luftundurchlässige Schicht (11) eine Durchlässigkeit für Luft von weniger als derjenigen des expandierten Polytetrafluorethylens (ePTFE) (18) aufweist.

11. Methode für das Bilden einer Dichtung, umfassend verbundenen Spiralen aus Band aus ePTFE und einer Fluorpolymerschicht, umfassend die Schritte des:

a. Bereitstellens einer Länge eines porösen, mehrschichtigen Bands aus expaniertem PTFE (18), das obere und untere Bandschichten (56) und Seitenflächen (58) aufweist, die sich der Länge des Bands zwischen den oberen und unteren Schichten entlang erstrecken, wobei die Ausdehnungsebene des expandierten PTFE's sich in der x-y-Ebene der Dichtung befindet, wobei die Ausdehnungsebene des Bands aus ePTFE und die x-y-Ebene des Bands und der Dichtung parallel zu den oberen und unteren Dichtungsflächen einer umkomprimieren Dichtung orientiert sind

b. Bereitstellens eines aus der Schmelze bearbeitbaren Fluorpolymers, umfassend mindestens eines von FEP und PFA;

c. Bildens einer Fluorpolymerschicht an den beiden Seitenflächen des Bands aus ePTFE, umfassend die Schritte des Kontaktierens der Seitenflächen des ePTFE's und des aus der Schmelze verarbeitbaren Fluorpolymers, Erhitzens der Seitenflächen des Bands aus ePTFE und des aus der Schmelze verarbeitbaren Fluorpolymers über die Schmelztemperatur des ePTFE's und des Fluorpolymers und Aufbringen von Druck zum Verschweißen der erhitzten Seitenflächen des ePTFE's und des Fluorpolymers; und

d. Bildens abwechselnder Rotationen des Bands aus expandiertem PTFE und Fluorpolymers in einem zunehmenden Abstand um den Außendurchmesser einer Düse, umfassend die Schritte des Windens des Bands aus expandiertem PTFE umfassend die Fluorpolymerschichten um die Düse für eine vollständige Rotation, das Winden und Aufbringen von Hitze an einer Verbindungsstelle von zwei Fluorpolymerschichten über die Fluorpolymerschmelztemperatur für die darauffolgenden Rotationen, das Kontaktieren des erhitzten Fluorpolymers und das Aufbringen von Druck, um die beiden Fluorpolymerschichten zu verschmelzen und Rotationen des expandierten PTFE's den Bandseitenflächen entlang zu verbinden.

12. Methode nach Anspruch 11, wobei der Schritt des Kontaktierens der Bahn aus ePTFE (18) und des aus der Schmelze verarbeitbaren Fluorpolymers den Schritt des Beschichtens mindestens einer Seitenfläche (58) des Bands aus ePTFE der Länge des Bands entlang mit dem aus der Schmelze verarbeitbare Fluorpolymer umfasst.

13. Methode nach Anspruch 11, wobei die Dichte des ePTFE's weniger als 1,8 g/cm$^3$ oder weniger als 1,2 g/cm$^3$ beträgt.

14. Methode nach Anspruch 11, wobei die oberen und unteren Bandschichten (56) oberen und unteren Dichtungsflächen entsprechen.

15. Methode nach Anspruch 11, wobei die Dichtung unkomprimiert ist und eine im Wesentlichen gleichförmige Dicke über die oberen und unteren Dichtungsflächen aufweist.

16. Methode nach Anspruch 11, wobei die Dichtung rund oder nicht rund ist.

**Revendications**

1. Joint statique comprenant :

un diamètre interne (9); et
au moins deux spirales jointes comprenant des rotations alternées d'au moins un ruban de PTFE expansé multicouche poreux (18) et au moins une couche substantiellement imperméable à l'air (11) en rotation en une distance croissante autour du diamètre interne ;

dans lequel le ruban en PTFE expansé a des couches de rubans supérieures et inférieures (56), et des surfaces latérales (58) se prolongeant entre les couches de rubans supérieures et inférieures,
dans lequel les rotations alternées du au moins un ruban en PTFE expansé et de la au moins une couche substantiellement imperméable à l'air sont jointes au niveau des surfaces latérales du ruban de PTFE expansé par la au moins une couche substantiellement imperméable à l'air, et
dans lequel les couches supérieures et inférieures du ruban et le plan d'expansion du au moins un ruban de PTFE expansé se trouve dans le plan des x-y du joint statique, le plan d'expansion du ruban d'ePTFE et le plan des x-y du ruban et du joint statique étant orientés de manière parallèle aux surfaces supérieures et inférieures d'un joint statique non comprimé.

2. Joint statique selon la revendication 1, dans lequel les couches supérieures et inférieures du ruban définissent des surfaces supérieures et inférieures de joint.

3. Joint statique selon la revendication 1, dans lequel le joint statique lorsqu'il n'est pas comprimé a une épaisseur substantiellement uniforme à travers les surfaces supérieures et intérieures du joint statique.

4. Joint statique selon la revendication 1, dans lequel l'ePTFE (18) a une densité inférieure à 1,8 g/cc, inférieure à 1,2 g/cc, ou inférieure à 1,0 g/cc.

5. Joint statique selon la revendication 1, dans lequel au moins une portion du ruban d'ePTFE (18) est expansée de manière monoaxiale, ou expansée de manière multiaxiale.

6. Joint statique selon la revendication 1, dans lequel au moins une couche de polytétrafluoroéthyléne expansée (ePTFE) (15) comprend au moins une charge.

7. Joint statique selon la revendication 6, dans lequel la au moins une charge comprend au moins un matériau choisi parmi les métaux, les semi-métaux, les oxydes métalliques, les verres, les céramiques, les charbons actifs, les noirs de carbone, les résines de type polymère, la silice, le sulfate de baryum, le graphite, et les billes de verre.

8. Joint statique selon la revendication 1. dans lequel la au moins une couche substantiellement imperméable à l'air comprend :

   un polymère fluoré ;
   un polymère fluoré pouvant être transformé à l'état fondu ;
   un copolymère de tétrafluoroéthyléne/éther de perfluoroalkyl vinyle (PFA) ;
   un copolymère de tétrafluoroéthylène/hexafluoropropylène (FEP) ;
   du polytétrafluoroéthylène (PTFE), du polytétrafluoroéthylène expansé densifié, ou les deux ; ou
   au moins l'un parmi du PFA ou du FEP en combinaison avec du ePTFE.

9. Joint statique selon la revendication 1, dans lequel la au moins une couche substantiellement imperméable à l'air (11) se prolonge substantiellement entièrement entre les couches supérieures et inférieures du ruban (56), ou se prolonge au-delà des couches supérieures et inférieures du ruban.

10. Joint statique selon la revendication 1, dans lequel la au moins une couche substantiellement imperméable à l'air (11) a une perméabilité à l'air inférieure à celle du polytétrafluoroéthylène expansé (ePTFE) (18).

11. Procédé de formation d'un joint statique comprenant des spirales jointes de ruban d'ePTFE et d'une couche de polymère fluoré comprenant les étapes de :

   a. fourniture d'une longueur d'un ruban de PTFE expansé multicouche poreux (18) ayant des couches supérieures et inférieures de ruban (56), et des surfaces latérales (58) prolongeant la longueur du ruban entre les couches supérieures et inférieures, dans lequel le plan d'expansion du PTFE expansé se trouve dans le plan des x-y du joint statique, le plan d'expansion du joint d'ePTFE et le plan des x-y du ruban et du joint statique étant orientés de manière parallèle aux surfaces supérieures et inférieures d'un joint statique non comprimé ;
   b. la fourniture d'un polymère fluoré pouvant être transformé à l'état fondu comprenant au moins l'un parmi du FEP et du PFA ;
   c. la formation d'une couche de polymère fluoré sur les deux surfaces latérales du ruban d'ePTFE comprenant les étapes de mise en contact des surfaces latérales d'ePTFE et du polymère fluoré pouvant être transformé à l'état fondu, le chauffage des surfaces latérales de ruban de PTFE expansé et du polymère fluoré pouvant être transformé à l'état fondu au-dessus de la température de fusion du ePTFE et du polymère fluoré, et l'application d'une pression pour souder les surfaces latérales chauffées du PTFE expansé et du polymère fluoré ; et
   d. la formation de rotations alternées du ruban de PTFE expansé et du polymère fluoré à une distance croissante autour d'un diamètre externe de filière comprenant les étapes d'enroulement du ruban de PTFE expansé comprenant les couches de polymère fluoré autour d'une filière sur un tour complet, l'enroulement et l'application de chaleur à une jonction des deux couches de polymère fluoré au-dessus de la température de fusion du polymère fluoré pour les rotations ultérieures, la mise en contact du polymère fluoré chauffé, et l'application d'une pression pour fusionner les deux couches de polymère fluoré et joindre les rotations du PTFE expansé le long des surfaces latérales du ruban.

12. Procédé selon la revendication 11, dans lequel l'étape de mise en contact du ruban d'ePTFE (18) et du polymère fluoré pouvant être transformé à l'état fondu comprend l'étape de revêtement d'au moins une surface latérale (58) du ruban d'ePTFE le long de la longueur du ruban avec le polymère fluoré pouvant être transformé à l'état fondu.

**13.** Procédé selon la revendication 11, dans lequel la densité du ePTFE est inférieure à 1,8 g/cc, ou inférieure à 1,2 g/cc.

**14.** Procédé selon la revendication 11, dans lequel les couches supérieures et inférieures du ruban (56) correspondent aux surfaces supérieures et inférieures du joint statique.

**15.** Procédé selon la revendication 11, dans lequel le joint statique n'est pas comprimé et a une épaisseur substantiellement uniforme à travers les surfaces supérieures et inférieures du joint statique.

**16.** Procédé selon la revendication 11, dans lequel le joint statique est circulaire ou non circulaire.

**Fig. 1**

**Fig. 1a**

**Fig. 1b**

**Fig. 2**

9

10

11

**Fig. 3**

9

10

11

**Fig. 4a**

42

42

See Fig. 4b

**Fig. 4b**

43

Fig. 5

Fig. 6

**Fig. 7a**

**Fig. 7b**

**Fig. 8**

Fig. 9

**Fig.10**

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3953566 A, Gore
- US 20030003290 A, Hisano
- US 6485809 B, Minor
- US 4990296 A, Pitolaj
- US 5964465 A, Mills
- WO 0127501 A1, Dove
- WO 0127501 A

- US 20030003290 A1, Hisano
- JP 11051192 B
- US 4187390 A
- US 6485809 A
- US 4096227 A
- US 4985296 A

**Non-patent literature cited in the description**

- Unit Cell Information on Some Important Polymers. **EDUARD S. CLARK.** Physical Properties of Polymers Handbook. American Institute of Physics, 1996